# EUROPEAN PATENT SPECIFICATION

(11) **EP 1 672 027 B1**
(45) Date of publication and mention of the grant of the patent: **13.01.2010**
(21) Application number: 04788275.8
(22) Date of filing: 29.09.2004
(51) Int. Cl.: C08L 67/00, C08L 77/00, C08J 3/24, C08L 9/02, C08L 21/00, C08L 33/08, C08L 71/00

(54) **THERMOPLASTIC ELASTOMER COMPOSITION AND FORMED ARTICLE**
THERMOPLASTISCHE ELASTOMERZUSAMMENSETZUNG UND FORMKÖRPER
COMPOSITION ELASTOMERE THERMOPLASTIQUE ET ARTICLE FORME

(30) Priority: 29.09.2003 JP 2003337154
(43) Date of publication of application: 21.06.2006
(73) Proprietor: Zeon Corporation, Tokyo 100-8246 (JP)
(72) Inventor: MASUDA, Hirofumi, c/o ZEON CORPORATION, Tokyo 100-8246 (JP); AIMURA, Yoshiaki, c/o ZEON CORPORATION, Tokyo 100-8246 (JP); UMETSU, Kiyonori, c/o ZEON CORPORATION, Tokyo 100-8246 (JP)
(74) Representative: Albrecht, Thomas
(86) International application number: PCT/JP2004/014208
(87) International publication number: WO 2005/030869

(56) References cited:
- EP-A- 0 293 821
- EP-A- 0 506 465
- JP-A- 1 306 447
- JP-A- 1 306 456
- JP-A- 7 053 831
- JP-A- 9 095 578
- JP-A- 2001 049 037
- JP-A- 2001 233 996
- JP-A- 2001 525 475
- JP-A- 2002 348 413
- JP-A- 2003 055 472
- US-A- 4 141 863

## Description

### TECHNICAL FIELD

The present invention relates to a thermoplastic elastomer composition comprised of a polyamide-based polymer and a rubber containing a gel, more particularly relates to a thermoplastic elastomer composition superior in heat resistance and oil resistance and further improved in mechanical properties.

### BACKGROUND ART

A polyamide-based elastomer being a multiblock copolymer comprised of a polyamide and a polyether as repeating units, is a thermoplastic elastomer superior in heat resistance and having flexibility. However, these elastomers are used as various parts as rubbery elastic members, so are high in hardness and are inferior in flexibility and strain recovery. Therefore, to improve on these points, a method of mixing a rubber in the elastomer is known. Various techniques for blending in the rubber have been proposed.

In particular, in recent years, in order to mix rubber with these elastomers to soften them and improve their elongation, compressive set, and other mechanical properties, it has been proposed to finely disperse rubber particles into the elastomer matrix and cross-link the rubber particles.

For example, a thermoplastic elastomer composition obtained by dispersing and mixing a cross-linked rubber ingredient which is a rubber cross-linked by a multifunctional monomer or other cross-linkable monomer and having a gel fraction or 20% or more into a polyester elastomer ingredient has been proposed (see Patent Document 1). This Patent Document 1 specifically discloses a composition obtained by mixing a cross-linked carboxy-modified nitrile-butadiene rubber with a polyether ester elastomer by a Bravender mill. However, with just simply dispersing and mixing cross-linked rubber in the elastomer, the mechanical properties cannot be sufficiently improved.

On the other hand, the method has been proposed of making the rubber particles to be dispersed into the elastomer a core-shell two-layer structure comprised of a cross-linked rubber core layer and a shell layer of a rubber having cross-linkable functional group and, in the presence of a cross-linking agent, mainly cross-linking the shell layer and dispersing and mixing it into the elastomer (see Patent Document 2). However, this method also improves the tensile properties or compressive set to a certain extent, but the fatigue resistance with respect to bending or constant stretching are not sufficiently improved.
Patent Document 1 : Japanese Patent Publication (A) No. 5-79256
Patent Document 2 : Japanese Patent Publication (A) No. 8-231770

EP 0 506 465 A2 discloses a thermoplastic elastomer composition of a polyester and an acrylonitrile-butadien rubber with a gel content of above 50%.

### DISCLOSURE OF THE INVENTION

### PROBLEM TO BE SOLVED BY THE INVENTION

An object of the present invention is to provide a thermoplastic elastomer composition superior in heat resistance, oil resistance, and mechanical properties and superior in fatigue resistance with respect to bending or constant stretching.

### MEANS FOR SOLVING THE PROBLEM

The inventors engaged in intensive studies to solve this problem and as a result discovered that by further dynamically cross-linking rubber particles containing a gel fraction in a specific amount or more and having the gel fraction dispersed from the surface layer to the inside in substantially the same concentration in the presence of a cross-linking agent and mixing and dispersing the same in a polyamide-based polymer, the rubber particles finely disperse in the polyamide-based polymer or polyester-based polymer matrix and further, since the finely dispersed rubber particles are closely cross-linked, the obtained thermoplastic elastomer composition is superior in heat resistance, oil resistance, and mechanical properties and further is superior in fatigue resistance with respect to bending or constant stretching. The inventors completed the present invention based on these discoveries.

### EFFECTS OF THE INVENTION

According to the present invention, there is provided a thermoplastic elastomer composition wherein cross-linked rubber particles are finely dispersed in a polyamide-based polymer matrix. This thermoplastic elastomer composition is superior in heat resistance, oil resistance, tensile elongation, compressive set, and other properties and further is superior in fatigue resistance with respect to bending or constant stretching, so can be suitably used for seals, hoses, automobile suspension parts, and other various rubber parts.

### BEST MODE FOR WORKING THE INVENTION

The thermoplastic elastomer composition of the present invention is characterized by being obtained by mixing a rubber (B) in which a gel fraction of 30 wt% or more is uniformly dispersed into a polyamide-based polymer (A1) and dynamically cross-linking the rubber (B).

First, the rubber (B) and polyamide-based polymer (A1) to be included in the thermoplastic elastomer composition will be explained. Note that thermoplastic elastomer composition of the present invention may contain one or more types of the polyamide-based polymer (A1).

### Rubber (B)

The rubber (B) used in the present invention has rubber elasticity and it is not particularly limited so long as it can be mixed with and dispersed in the polyamide-based polymer (A1).
Specifically, acryl rubber may be mentioned.
From the viewpoints of the heat resistance, oil resistance, etc., an acrylonitrile-butadiene rubber, and other nitrile copolymerized conjugated diene rubber and acryl rubber are particularly preferable.

A nitrile copolymerized conjugated diene rubber is a rubber obtained by copolymerizing an α,β-ethylenic unsaturated nitrile monomer, a conjugated diene monomer, and, in accordance with need, another monomer able to copolymerize with these monomers and in accordance with need hydrogenating the carbon-carbon unsaturated bonds of the main chain.
As the α,β-ethylenic unsaturated nitrile monomer, acrylonitrile, methacrylonitrile, α-chloroacrylonitrile, etc. may be mentioned. Among these, acrylonitrile is preferable. The content of the α,β-ethylenic unsaturated nitrile monomer units in the nitrile copolymerized conjugated diene rubber is preferably 30 to 80 wt%, more preferably 35 to 60 wt%.
As the conjugated diene monomer, 1,3-butadiene, isoprene, 2,3-dimethyl-1,3-butadiene, 1,3-pentadiene, etc. may be mentioned.
Among these, 1,3-butadiene is preferable.

An acryl rubber is a polymer containing in its molecule monomer units of an acrylic acid ester monomer or methacrylic acid ester monomer (hereinafter abbreviated as a "(meth)acrylic acid ester") in an amount of 50 wt% or more, preferably 60 wt% or more, more preferably 65 wt% or more. As the (meth)acrylic acid ester monomer, for example a (meth)acryl acid alkyl ester monomer, a (meth)acryl acid alkoxyalkyl ester monomer, etc. may be mentioned.
As the (meth)acrylic acid alkyl ester monomer, an ester of a C1 to C8 alkanol and (meth)acrylic acid is preferable. Specifically, methyl (meth)acrylate, ethyl (meth)acrylate, n-propyl (meth)acrylate, n-butyl (meth)acrylate, isopropyl (meth)acrylate, isobutyl (meth)acrylate, n-hexyl (meth)acrylate, 2-ethylhexyl (meth)acrylate, cyclohexyl (meth)acrylate, etc. may be mentioned. Among these, ethyl (meth)acrylate and n-butyl (meth)acrylate are preferable.
As the (meth)acryl acid alkoxyalkyl ester monomer, an ester of a C2 to C8 alkoxyalkanol and (meth)acrylic acid is preferable. Specifically, methoxymethyl (meth)acrylate, ethoxymethyl (meth)acrylate, 2-ethoxyethyl (meth)acrylate, 2-butoxyethyl (meth)acrylate, 2-methoxyethyl (meth)acrylate, 2-propoxyethyl (meth)acrylate, 3-methoxypropyl (meth)acrylate, 4-methoxybutyl (meth)acrylate, etc. may be mentioned. Among these, 2-ethoxyethyl (meth)acrylate and 2-methoxyethyl (meth)acrylate are preferable. 2-ethoxyethyl acrylate and 2-methoxyethyl acrylate are particularly preferable.

The acryl-based polymer obtained by polymerization of the (meth)acrylic acid ester monomer used in the present invention may contain, in addition to the main structural units as above, monomer units able to copolymerize with the same. As the monomer able to copolymerize with a (meth)acrylic acid ester monomer, for example, a conjugated diene-based monomer, nonconjugated diene-based monomer, aromatic vinyl monomer, α,β-ethylenic unsaturated nitrile monomer, amide group-containing (meth)acryl monomer, multifunctional di(meth)acryl monomer, other olefin-based monomer, etc. may be illustrated.
As the conjugated diene-based monomer, 1,3-butadiene, butadiene, chloroprene, piperylene, etc. may be mentioned. As the nonconjugated diene-based monomer, 1,2-butadiene, 1,4-pentadiene, dicyclopentadiene, norbornene, ethylidene norbornene, 1,4-hexadiene, norbornadiene, etc. may be mentioned. As the aromatic vinyl monomer, styrene, α-methylstyrene, divinylbenzene, etc. may be mentioned. As the α,β-ethylenic unsaturated nitrile monomer, acrylonitrile and methacrylonitrile may be illustrated. As the amide group-containing (meth)acryl monomer, acrylamide, methacrylamide, etc. may be mentioned. As the other olefin-based monomer, ethylene, propylene, vinyl chloride, vinylidene chloride, vinyl acetate, ethylvinyl ether, butylvinyl ether, etc. may be mentioned.
When copolymerizing a monomer other than the above (meth)acrylic acid ester monomer, copolymerization in an amount, in the molecule, of 50 wt% or less, preferably 40 wt% or less, more preferably 35 wt% or less, is preferable.

The rubber (B) used in the present invention contains a gel fraction in an amount of 30 wt% or more, and the gel fraction is characterized by being uniformly dispersed in the rubber (B).
The "gel fraction" is a cross-linked product of the rubber (B) and is an already cross-linked ingredient before mixing the rubber (B) into the polyamide-based polymer (A1) and/or polyester-based polymer (A2) and dynamically cross-linking the rubber (B) in the presence of a cross-linking agent. The gel fraction of the rubber (B) is already cross-linked and is an ingredient not soluble in a good solvent of that rubber, so that content can be measured by the following method. That is, the rubber (B) is weighed in a predetermined amount and dissolved in a good solvent of the rubber. The obtained solution is filtered by a metal mesh or other filter. The solvent insolubles trapped on the filter are measured for measurement of the fraction.

The content of the gel fraction of the rubber (B) is 30 wt% or more, more preferably 50 wt% or more, particularly preferably 60 wt% or more. If the content of the gel fraction in the rubber (B) is too small, the cross-linking efficiency after the dynamic cross-linking reaction is not sufficient and, as a result, the dispersed particles of the rubber dispersed in the polyamide-based polymer matrix become greater in size, the mechanical properties drop, and other problems arise in some cases. Note that the upper limit of the content of the gel fraction in rubber (B) is not particularly limited, but usually is 90 wt% or so in weight.

Further, the gel fraction present in the rubber (B) in an amount of 30 wt% or more is characterized by being uniformly dispersed in the rubber (B).
The gel fraction being "uniformly dispersed" in the rubber (B) means that when the rubber (B) is mixed and dispersed in a particle form into the polyamide-based polymer (A1), the particles of the rubber (B), both at the insides and the surface layer parts, have contents of the gel fractions substantially the same. That is, this means that the gel fraction is present in substantially a constant concentration from the surface layer parts to the insides of the rubber (B) particles. Therefore, cases where the gel fraction is scattered in the rubber (B) particles, but the contents from the surface layer parts to the insides are substantially the same are included in the scope of the present invention, while on the other hand, for example, cases where gel is present only at the core parts of the insides and the gel is not present at the surface layer parts, that is, a core-shell two-layer structure, are not included in the scope of the present invention.

In the present invention, by having the gel fraction be uniformly dispersed in the rubber (B) in this way, compared with the core-shell rubber, the cross-linking efficiency at the time of dynamic cross-linking becomes higher. For this reason, as a result, the size of the dispersed particles of rubber (B) in the polyamide-based polymer (A1) matrix becomes smaller and the mechanical properties or fatigue resistance are improved and other effects are obtained.

The rubber (B) used in the present invention preferably has cross-linkable groups for forming the gel fraction. The cross-linkable groups for formation of the gel fraction are not limited so long as they are groups which can cross-link the polymer chain of the rubber (B), but are more preferably groups which enable cross-linking even without the presence of a cross-linking agent.

To introduce into the rubber (B) such cross-linkable groups for formation of the gel fraction, it is sufficient to copolymerize a monomer having the cross-linkable groups in the rubber (B). As such a monomer having the cross-linkable groups, for example, a multifunctional monomer having two or more vinyl groups etc. may be mentioned. Specifically, divinylbenzene, 1,3,5-trivinyl benzene, and other multifunctional vinyl compounds; diaryl phthalate, diaryl fumarate, and other diaryl compounds; trimethylolpropane triacrylate, ethyleneglycol dimethacrylate, and other multifunctional acrylates; etc. may be mentioned. To obtain a gel fraction of 30 wt% or more in the rubber (B), the monomer having the cross-linkable groups is used in an amount, with respect to the total amount of monomer used for polymerization of the rubber (B), of preferably 0.2 to 1.5 wt%, more preferably 0.3 to 1.0 wt%. If making the amount of use of the monomer having the cross-linkable groups the above range, even without the presence of a cross-linking agent, the gel fraction in the rubber (B) produced by the polymerization reaction becomes 30 wt% or more.

The rubber (B) of the present invention further has cross-linkable groups for dynamic cross-linking so as to be efficiently cross-linked by dynamic cross-linking explained later in detail.
This cross-linkable groups for dynamic cross-linking are preferably functional groups which can react with a cross-linking agent explained later in the presence of the cross-linking agent to cross-link the rubber (B). Such cross-linkable groups may be functional groups generally known to be able to react with a cross-linking agent and may be suitably selected in accordance with the type of the cross-linking agent used etc. As such cross-linkable groups, one or more types of groups selected from the group comprised of halogen-containing groups, epoxy groups, and carboxyl groups are particularly preferable. Further, to introduce into the rubber (B) these cross-linkable groups for dynamic cross-linking, it is sufficient to mix a monomer having these cross-linkable groups into the above-mentioned monomer used for polymerization at the time of polymerization of the rubber (B) and polymerize it by a known method. As such a monomer having cross-linkable groups, the following may be mentioned.

As the monomer having halogen-containing groups, 2-chloroethylvinyl ether and other halogen-containing vinyl ethers; chloromethylstyrene and other halogen-containing styrene derivatives; vinyl chloroacetate and other halogen-containing vinyl acetates; epichlorohydrin, epibromohydrin, and other epihalohydrins; etc. may be mentioned.
As the monomer having epoxy groups, allyl glycidyl ether, glycidyl methacrylate, etc. may be mentioned.
As the monomer having carboxyl groups, acrylic acid, methacrylic acid, itaconic acid, fumaric acid, maleic acid, and other organic acids; a maleic acid monobutyl ester, fumaric acid monobutyl ester, and other butenedionic acid monoalkyl esters; a maleic acid monocycloalkyl ester, fumaric acid monocycloalkyl ester, and other butenedionic acid monocycloalkyl esters; etc. may be mentioned.

The monomer having cross-linkable groups for dynamic cross-linking is used in an amount, in the total monomer used for polymerization of the rubber (B), of preferably 0.5 to 10 wt%, more preferably 1.0 to 5.0 wt%. If the amount of use of the monomer having cross-linkable groups for dynamic cross-linking is too small, at the time of dynamic cross-linking, the cross-linking does not sufficiently progress and therefore the dispersability of the rubber becomes impaired and other problems arise, while if the amount is too great, stable rubber cannot be produced stably in the process of production of the rubber and other problems arise.

The rubber (B) used in the present invention can be obtained by polymerization of the above-mentioned monomer (monomer forming nitrile copolymerized conjugated diene rubber, acryl rubber, polyether rubber, etc.) and preferably a monomer having cross-linkable groups for formation of a gel fraction and/or a monomer having cross-linkable groups for dynamic cross-linking by a known polymerization method. Specifically, a nitrile copolymerized conjugated diene rubber or acryl rubber can be obtained by emulsion polymerization etc., while a polyether rubber can be obtained by solution polymerization or solvent slurry polymerization etc.

Note that when using a monomer having cross-linkable groups for formation of the gel fraction to introduce cross-linkable groups for formation of the gel fraction into the rubber (B), at least part of the cross-linkable groups for formation of the gel fraction are already cross-linked and form a gel fraction before the dynamic cross-linking.

Further, when using a monomer having cross-linkable groups for dynamic cross-linking to introduce cross-linkable groups for dynamic cross-linking into the rubber (B), it is possible to dynamic cross-link more efficiently by using the cross-linking agent described in detail later.

In the present invention, preferably, by using an above-mentioned monomer as the monomer having cross-linkable groups for formation of the gel fraction and making that content within the above-mentioned predetermined range, even if not adding a cross-linking agent, it is possible to make at least part of the cross-linkable groups for formation of the gel fraction react for cross-linking and possible to make the gel fraction 30 wt% or more. Further, by preferably introducing cross-linkable groups reacting upon addition of the above-mentioned cross-linking agent as the cross-linkable groups for dynamic cross-linking, it is possible to perform the dynamic cross-linking of the rubber (B) by the addition of the cross-linking agent more efficiently.

### Polyamide-Based Polymer (A1)

The polyamide-based polymer (A1) used in the present invention is not particularly limited so long as it is a polymer having an acid amide bond (-CONH-), but in the present invention, a polyamide polymer generally used as a polyamide resin is preferably used.

Specifically, a polymer obtained by polycondensation of diamine and dibasic acid, a polymer obtained by polycondensation of diformyl or another diamine derivative and a dibasic acid, a polymer obtained by polycondensation of a dimethyl ester or other dibasic acid derivative and a diamine, a polymer obtained by reaction of dinitrile or diamide and formaldehyde, a polymer obtained by polyaddition of diisocyanate and a dibasic acid, a polymer obtained by self-condensation of an amino acid or its derivative, a polymer obtained by ring-opening polymerization of lactam, etc. may be mentioned. Further, these polyamide polymers may also include polyether polymer blocks etc. as copolymer ingredients.

As specific examples of these polyamide polymers, polycapramide (6-nylon), polyhexamethylene adipamide (6,6-nylon), polyhexamethylene sebacamide (6,10-nylon), polyundecanamide (11-nylon), poly-ω-aminoheptanoic acid (7-nylon), poly-ω-aminononaoic acid (9-nylon), and other nylon resins may be mentioned. Among these, from the viewpoints of general usefulness, heat resistance, etc., 6-nylon, 6,6-nylon, 11-nylon, etc. are preferable.

As the polyamide-based polymer (A1), one having a melting point of preferably 215 to 265°C, more preferably 215 to 230°C, and a tensile breakage strength of preferably 35 MPa or more, more preferably 60 MPa or more, is suitably used.

### Method of Production of Thermoplastic Elastomer Composition (Dynamic Cross-Linking)

The thermoplastic elastomer composition of the present invention is produced by mixing the above-mentioned rubber (B) into the polyamide-based polymer (A1) and dynamically cross-linking the rubber (B).
The "dynamic cross-linking" means cross-linking the rubber (B) in the presence of a cross-linking agent while mixing into the polyamide-based polymer (A1) the rubber (B) and making this rubber (B) disperse into the polyamide-based polymer (A1). As such dynamic cross-linking, specifically, the method of giving shear to and mixing the polyamide-based polymer (A1) and rubber (B) using a Bravender mill or Labo Plastomill or other batch type kneader or a twin-screw extruder or other continuous type kneader to cross-link the cross-linkable groups for dynamic cross-linking of the rubber (B) may be mentioned. By cross-linking the cross-linkable groups for dynamic cross-linking of the rubber (B) while mixing and dispersing the rubber (B) in this way, the obtained thermoplastic elastomer composition is improved in mechanical strength and fatigue resistance with respect to bending or constant stretching.

In the present invention, as the cross-linking agent for dynamic cross-linking of the cross-linkable groups for dynamic cross-linking of the rubber (B), a cross-linking agent generally used as a cross-linking agent for rubber may be used, but it is preferable to use the following in accordance with the type of the cross-linkable groups for dynamic cross-linking of the rubber (B).
That is, when the cross-linkable groups for dynamic cross-linking are vinyl groups or other functional groups having carbon-carbon unsaturated bonds, a sulfur-based cross-linking agent, organic peroxide-based cross-linking agent, etc. may be mentioned.
When the cross-linkable groups for dynamic cross-linking are the above halogen-containing groups, a metal soap, sulfur-based vulcanizing agent, triazine-based vulcanizing agent, etc. may be mentioned.
When the cross-linkable groups for dynamic cross-linking are epoxy groups, an organic ammonium-based cross-linking agent, polyvalent acid-based cross-linking agent, etc. may be mentioned.
When the cross-linkable groups for dynamic cross-linking are carboxyl groups, a polyvalent amine-based cross-linking agent, diisocyanate-based cross-linking agent, etc. may be mentioned.

In the present invention, the ratio of mixture of the polyamide-based polymer (A1), and the rubber (B) at the time of the dynamic cross-linking is, in terms of "the total weight of the polyamide-based polymer (A1)" : "the weight of the rubber (B)", preferably 30:70 to 80:20, more preferably 40:60 to 70:30. If the amount of the rubber (B) is too small, the compressive set deteriorates and other problems arise, while if conversely too great, the dispersion of the rubber (B) at the time of the dynamic cross-linking and at the time of the shaping deteriorates and as a result the workability deteriorates and other problems are liable to arise.

Further, the cross-linking agent is used in an amount, with respect to a total 100 parts by weight of the polyamide-based polymer (A1), and rubber (B), of preferably 0.1 to 2.0 parts by weight, more preferably 0.5 to 1.0 part by weight. If the amount of the cross-linking agent is too small, the cross-linking at the time of the dynamic cross-linking does not proceed sufficiently, the dispersability of the rubber (B) into the polyamide-based polymer (A1) deteriorates, the compressive set increases, and other problems arise, while if conversely too great, degradation of the polyamide-based polymer (A1) is promoted and other problems are liable to arise.

In the present invention, the method of the dynamic cross-linking may be any general dynamic cross-linking method, but preferably it is based on the following method.
First, the rubber (B) is masticated. Next, the polyamide-based polymer (A1) are heated to melt and the masticated rubber (B) is mixed with and dispersed into the heated and melted polyamide-based polymer (A1).
When the rubber (B) has sufficiently finely dispersed into the matrix of the polyamide-based polymer (A1), the cross-linking agent is added and the result is further kneaded.

As the kneader used for the kneading, a Bravender mill, Labo Plastomill, or other batch type kneader; a single-screw extruder, twin-screw extruder, or other continuous type kneader; or another kneader generally used for dynamic cross-linking may be used. Further, these may also be combined for use. The kneading temperature is preferably 220 to 270°C, more preferably 230 to 250°C. If the kneading temperature is too low, the polyamide-based polymer (A1) are not sufficiently melt and other problems arise, while conversely if too high, the rubber (B) degrades due to the heat and other problems are liable to arise.

When using an extruder or other continuous type kneader, the cross-linking agent is preferably added through holes provided in the middle of the extruder barrel.

The thermoplastic elastomer composition of the present invention obtained by the above method may further contain, to a range not detracting from the effect of the present invention, carbon black or silica or other filler; a plasticizer; a lubricant; an antioxidant, or other compounding agent generally mixed into to rubber or a resin.

The thermoplastic elastomer composition of the present invention obtained by the above method may be formed to any shape to obtain a shaped product for use for a rubber part. As the rubber part, a shaft seal, bearing seal, or other seal part; an air duct hose, fuel hose, oil hose, or other hose parts; a constant velocity joint boot, a rack and pinion part, or other automobile related rubber part etc. may be mentioned.

### EXAMPLES

The present invention will be explained in further detail by the following description of examples and comparative examples, but the present invention is not limited to these examples. Note that unless otherwise indicated, "parts" and "%" are based on weight. The various physical properties in the examples and comparative examples were measured by the following methods.

### (1) Content of Gel Fraction in Rubber (B)

The content of the gel fraction in the rubber (B) was obtained by measuring the ratio of solvent insolubles when dissolving the rubber (B) in a good solvent. Specifically, about 0.2 g of the rubber (B) was weighed and dissolved in methylethylketone, then the obtained solution was filtered by a filter, such as a wire net. The weight of the insolubles trapped in the filter after removal of the solvent was measured and the ratio with respect to the total weight of the dissolved rubber was calculated.

### (2) Tensile Strength and Tensile Elongation (Tensile Elongation at Break)

The thermoplastic elastomer composition of the present invention was pressed by a 250°C preheated press machine to a 2 mm thick sheet, then a predetermined shape was punched out of it to prepare a test piece. This test piece was used to measure the tensile strength and tensile elongation at break in accordance with the JIS K6251 tensile test.

### (3) Heat Resistance

A test piece the same as the test piece measured for tensile strength and tensile elongation at break at the above (2) was left standing in a 150°C environment for 168 hours for air heat aging, then this aged test piece was used to again measure the tensile strength and tensile elongation at break by the above method. The changes in these physical properties before and after heat aging (change in tensile strength: ΔTB, change in tensile elongation at break: ΔEB) were measured. The closer these amounts of change to 0, the better the heat resistance.

### (4) Oil Resistance

In accordance with JIS K6258, the test piece prepared at the above (2) was immersed in IRM903 test oil in a 150°C environment for 70 hours and was measured for the rate of change of volume. The smaller the rate of change of volume, the better the oil resistance.

### (5) Compressive Set

In accordance with JIS K6262, a test piece for compressive set measurement was prepared and was measured for compressive set under compression conditions of a 20% compression rate, 120°C, and 70 hours. The smaller the value of the compressive set, the better.

### (6) Fatigue Resistance

A test piece punched out into a predetermined shape was used. The test piece was stretched to 1/2 of the elongation at break, then returned to the 0% stretched state. This operation was repeated at a speed of 300 rpm. The number of operations until the test piece broke was measured to evaluate the fatigue resistance with respect to repetition of constant stretching. The larger the number of operations until breaking, the better the fatigue resistance.

### Example 1

### Production of Carboxyl Group-Containing Acryl Rubber (B1)

First, a polymerization reactor equipped with a thermometer, stirring device, nitrogen introduction tube, and pressure reduction device was prepared with ion exchanged water in an amount of 200 parts, sodium lauryl sulfate 3 parts, ethyl acrylate 47 parts, n-butyl acrylate 50 parts, ethyleneglycol dimethacrylate 1 part, and monomethyl fumarate 2 parts. The pressure was reduced to evacuate the air and nitrogen was substituted repeatedly to sufficiently remove the oxygen. Next, sodium formaldehyde sulfoxylate was added in an amount of 0.002 part and cumen hydroperoxide in 0.005 part, emulsion polymerization reaction was started at 20°C under ordinary pressure, and the reaction was continued until the polymerization conversion rate reached 95% or more. The obtained latex was made to coagulate by a calcium chloride aqueous solution, then was rinsed and dried to obtain acryl rubber (B1). The acryl rubber (B1) had a gel fraction of 80% in content and a Mooney viscosity (ML₁₊₄, 100°C) of 45. Further, it was confirmed that the obtained acryl rubber (B1) cross-linked substantially uniformly from the surface layer parts to the insides of the particles and that the gel fraction was dispersed by a substantially constant concentration.

### Dynamic Cross-Linking With Polyamide-Based Polymer (A1)

A Labo Plastomill made by Toyo Seiki Kogyo (capacity 600 ml) was used, and a 230°C preheated mixer was prepared with the acryl rubber (B1) in an amount of 40 parts. This was masticated for 1 minute. Next, the mixer was prepared with a polyamide-based polymer (A1: 6-nylon, 1013B made by Ube Industries, Ltd., melting point 220°C, tensile breakage strength 660 MPa) in an amount of 60 parts and the result was mixed for 5 minutes. Next, hexamethylene diamine carbamate (cross-linking agent 1) was prepared and the result was mixed for a further 7 minutes to dynamically cross-link the acryl rubber (B1). After the end of this, the mixture was quickly taken out and pressed by a not preheated press machine to prepare a sheet-shaped sample. Next, the prepared sample was pressed by a 250°C preheated press machine to form a 2 mm thick sheet and obtain a shaped product. The obtained shaped product was evaluated by the above methods. The results are shown in Table 1.

### Comparative Example 2a

### Production of Epoxy Group-Containing Acryl Rubber (B2)

The composition of the monomer mixture used for the polymerization was changed to ethyl acrylate in 47 parts, n-butyl acrylate 50 parts, ethyleneglycol dimethacrylate 1 part, and glycidyl methacrylate 2 parts. Otherwise, the same procedure as with the acryl rubber B1 was used for polymerization to obtain the acryl rubber (B2). The acryl rubber (B2) had a gel fraction of 75% and a Mooney viscosity (ML₁₊₄, 100°C) of 40. Further, it was confirmed that the obtained acryl rubber (B2) cross-linked substantially uniformly from the surface layer parts to the insides of the particles and that the gel fraction was dispersed by a substantially constant concentration.

### Dynamic Cross-Linking With Polyester-Based Polymer (A2)

The acryl rubber (B1) was changed to the acryl rubber (B2), the polyamide-based polymer (A1) was changed to a polyester-based polymer (A2: polybutylene terephthalate, DURANEX500FP made by Polyplastics Co., Ltd., melting point 223°C, tensile breakage strength 58 MPa), and the cross-linking agent was changed to 2-methylimidazole (cross-linking agent 2). Otherwise, the same procedure was followed as in Example 1 for mixing and dispersion and for dynamic cross-linking, then shaping to obtain a sheet-shaped shaped product. The obtained shaped product was evaluated in the same way as in Example 1. The results are shown in Table 1.

### Example 3

### Production of Carboxyl Group-Containing Hydrogenated Nitrile Rubber (B3)

A monomer mixture comprised of acrylonitrile in an amount of 34 parts, butadiene 67 parts, methacrylic acid 2 parts, and divinylbenzene 1 part was used and the polymerization reaction temperature was made 10°C. Otherwise, the same procedure was followed as in Example 1 for emulsion polymerization to obtain a carboxyl group-containing acrylonitrile-butadiene rubber (NBR) latex. The obtained carboxyl group-containing NBR was hydrogenated using a palladium acetate catalyst to obtain a 95% hydrogenation rate carboxyl group-containing hydrogenated acrylonitrile-butadiene rubber (B3; carboxyl group-containing HNBR). The obtained rubber (B3) had a gel fraction of 85% and a Mooney viscosity (ML₁₊₄, 100°C) of 80. Further, it was confirmed that the obtained carboxyl group-containing HNBR (B3) cross-linked substantially uniformly from the surface layer parts to the insides of the particles and that the gel fraction was dispersed by a substantially constant concentration.

### Dynamic Cross-Linking With Polyamide-Based Polymer (A1)

The acryl rubber (B1) was changed to the above carboxyl group-containing HNBR (B3). Otherwise, the same procedure was followed as in Example 1 for mixing and dispersion and for dynamic cross-linking, then shaping to obtain a sheet-shaped shaped product. The obtained shaped product was evaluated in the same way as in Example 1. The results are shown in Table 1.

### Comparative Example 1

### Production of Core-Shell Rubber (B4)

First, the same procedure as with the acryl rubber B1 was followed for emulsion polymerization of a monomer mixture comprised of ethyl acrylate in an amount of 49 parts, n-butyl acrylate 50 parts, and ethyleneglycol dimethacrylate 1 part to obtain a latex with acryl rubber as a core. Next, in the presence of the core latex in an amount of 127.2 parts, ion exchanged water in an amount of 200 parts, ethyl acrylate 48 parts, n-butyl acrylate 50 parts, and monomethyl fumarate 2 parts were prepared. Next, the pressure was reduced to evacuate the air and nitrogen was substituted repeatedly to sufficiently remove the oxygen, then sodium formaldehyde sulfoxylate in an amount of 0.002 part and cumen hydroperoxide in 0.005 part were added, the emulsion polymerization reaction was started at ordinary pressure and 20°C, and the reaction was continued until reaching a polymerization conversion rate of 95% or more to obtain a core-shell rubber (B4) comprised of an acryl rubber core with an acryl rubber shell layer on its surface. The obtained core-shell rubber (B4) had a shell layer in the uncross-linked state and a core with a gel fraction of 60%. Further, the Mooney viscosity (ML₁₊₄, 100°C) was 40.

### Dynamic Cross-Linking With Polyester-Based Polymer (A2)

Instead of the acryl rubber B2, the core-shell rubber B4 was used. Otherwise, the same procedure was followed as in Example 2 for mixing and dispersion and for dynamic cross-linking, then shaping to obtain a sheet-shaped shaped product. The obtained shaped product was evaluated in the same way as in Example 1. The results are shown in Table 1.

### Comparative Example 2

The acryl rubber B1 and the polyamide-based polymer (A1) were kneaded without using a cross-linking agent by a Labo Plastomill at 230°C for 10 minutes. Otherwise, the same procedure was followed as in Example 1 for mixing and dispersion and for dynamic cross-linking, then shaping to obtain a shaped product having a sheet-shape. The obtained shaped product was evaluated in the same way as in Example 1. The results are shown in Table 1.

**Table 1**

| | Ex. 1 | Comp. Ex. 2a | Ex. 3 | Comp. Ex. 1 | Comp. Ex. 2 |
|---|---|---|---|---|---|
| Polyamide-based polymer (A1) | 6-nylon | - | 6-nylon | - | 6-nylon |
| Amount (parts) | 60 | - | 60 | - | 60 |
| Polyester-based polymer (A2) | - | Polybutylene terephthalate | - | Polybutylene terephthalate | - |
| Amount (parts) | - | 60 | - | 60 | - |
| Rubber (B) | Acryl rubber (B1) | Acryl rubber (B2) | HNBR (B3) | Core-shell rubber (B4) | Acryl rubber (B1) |
| Amount (parts) | 40 | 40 | 40 | 40 | 40 |
| Gel fraction (wt%) | 80 | 75 | 85 | Core gel fraction 60 | 80 |
| Cross-linking agent | Cross-linking agent 1 | Cross-linking agent 2 | Cross-linking agent 1 | Cross-linking agent 2 | None |
| Amount (parts)*1) | 0.5 | 0.5 | 0.5 | 0.5 | - |
| Tensile strength (MPa) | 18.5 | 20.5 | 28.5 | 10.6 | 6.5 |
| Tensile elongation at break (%) | 170 | 220 | 310 | 180 | 120 |
| Heat resistance ΔTB (%) | +10 | +12 | +25 | +30 | +35 |
| Heat resistance ΔEB (%) | -25 | -27 | -29 | -30 | -30 |
| Oil resistance ΔV (%) | 6 | 9 | 10 | 10 | 9 |
| Compressive set (%) | 60 | 55 | 75 | 75 | 95 |
| Fatigue resistance (Times) | >1000000 | >1000000 | >1000000 | 4000 | 300 |

| | | | | | |
|---|---|---|---|---|---|
| *1) Number of parts with respect to total 100 parts of (A1)+(A2)+(B) Cross-linking agent 1: hexamethylene diamine carbamate Cross-linking agent 2: 2-methylimidazole | | | | | |

Above, as will be understood from Table 1, Comparative Example 1 using a core-shell structure rubber where the gel fraction is not uniformly dispersed and Comparative Example 2 where dynamic cross-linking was not performed are inferior in heat resistance, compressive set, and fatigue resistance, while when using a thermoplastic elastomer composition obtained by dynamic cross-linking using rubber in which a gel fraction of 30% or more is uniformly dispersed of the present invention, all of these properties are superior.

## Claims

1. A thermoplastic elastomer composition obtained by mixing a rubber (B) into a polyamide-based polymer (A1) wherein the rubber (B) is an acryl rubber or nitrile copolymerized conjugated diene rubber, a gel fraction of the rubber (B) is 30 wt% or more, and the gel fraction is uniformaly dispersed in the rubber (B) and dynamically cross-linking the rubber (B).

2. The thermoplastic elastomer composition as set forth in claim 1, wherein said rubber (B) has cross-linkable groups.

3. The thermoplastic elastomer composition as set forth in claim 2, wherein said cross-linkable groups are functional groups able to react with a cross-linking agent and to cross-link that rubber (B) in the presence of that cross-linking agent.

4. The thermoplastic elastomer composition as set forth in claim 2 or 3, wherein said cross-linkable groups are at least one type selected from the group comprising halogen-containing groups, epoxy groups, and carboxyl groups.

5. A shaped product obtained by shaping a thermoplastic elastomer composition as set forth in any one of claims 1 to 4.

## Patentansprüche

1. Thermoplastische Elastomerzusammensetzung, erhalten durch Einmischen eines Kautschuks (B) in ein polyamidbasiertes Polymer (A1), wobei der Kautschuk (B) ein Acrylkautschuk oder ein Nitril-copolymerisierter konjugierter Dienkautschuk ist, die Gelfraktion des Kautschuks (B) 30 Gew.-% oder mehr beträgt, und die Gelfraktion einheitlich im Kautschuk (B) dispergiert ist, und dynamisches Vernetzen des Kautschuks (B).

2. Thermoplastische Elastomerzusammensetzung gemäß Anspruch 1, wobei der Kautschuk (B) vernetzbare Gruppen besitzt.

3. Thermoplastische Elastomerzusammensetzung gemäß Anspruch 2, wobei die vernetzbaren Gruppen funktionelle Gruppen sind, die in der Lage sind, mit einem Vernetzungsmittel zu reagieren und den Kautschuk (B) in Gegenwart des Vernetzungsmittels zu vernetzen.

4. Thermoplastische Elastomerzusammensetzung gemäß Anspruch 2 oder 3, wobei die vernetzbaren Gruppen von mindestens einem Typ sind, ausgewählt sind aus der Gruppe, umfassend halogenhaltige Gruppen, Epoxygruppen und Carboxylgruppen.

5. Geformtes Produkt, erhalten durch Formen einer thermoplastischen Elastomerzusammensetzung gemäß einem beliebigen der Ansprüche 1 bis 4.

## Revendications

1. Composition élastomère thermoplastique obtenue par mélange d'un caoutchouc (B) avec un polymère à base de polyamide (A1), dans laquelle le caoutchouc (B) est un caoutchouc acrylique ou un caoutchouc de diène conjugué copolymérisé avec un nitrile, une fraction de gel du caoutchouc (B) comprend au moins 30 % en poids et la fraction de gel est dispersée uniformément dans le caoutchouc, et par réticulation dynamique du caoutchouc (B).

2. Composition élastomère thermoplastique selon la revendication 1, dans laquelle le caoutchouc (B) a des groupes réticulables.

3. Composition élastomère thermoplastique selon la revendication 2, dans laquelle les groupes réticulables sont des groupes fonctionnels qui sont capable de réagir avec un agent réticulant et de réticuler ledit caoutchouc (B) en présence dudit agent réticulant.

4. Composition élastomère thermoplastique selon la revendication 2 ou 3, dans laquelle les groupes réticulables sont au moins un type choisi parmi le groupe comprenant des groupes contenant un halogène, des groupes époxydes et des groupes carboxyles.

5. Article moulé qui est obtenu par moulage d'une composition élastomère thermoplastique selon l'une quelconque des revendications 1 à 4.
